Europäisches Patentamt

(19) European Patent Office   (11) Numéro de publication: **0 095 541**
**B1**
Office européen des brevets

(12) **FASCICULE DE BREVET EUROPEEN**

(45) Date de publication du fascicule du brevet:   (51) Int. Cl.⁴: **G 01 N 21/90**
03.08.88

(21) Numéro de dépôt: **82450008.6**

(22) Date de dépôt: **27.05.82**

(54) **Procédé et dispositif d'inspection automatique par contraste de transparence, notamment de récipients.**

(43) Date de publication de la demande:
**07.12.83 Bulletin 83/49**

(45) Mention de la délivrance du brevet:
**03.08.88 Bulletin 88/31**

(84) Etats contractants désignés:
**AT BE CH DE FR GB IT LI LU NL SE**

(56) Documents cités:
**DE - A - 3 035 077**
**FR - A - 2 301 006**
**FR - A - 2 380 551**
**FR - A - 2 437 616**
**US - A - 3 549 890**

(73) Titulaire: **I 2S, 239, Rue du Jardin Public,**
**F-33000 Bordeaux (FR)**

(72) Inventeur: **Ricros, Alain, 20, rue Victoire Américaine,**
**F-33000 Bordeaux (FR)**
Inventeur: **Blouin, Jean-Louis, "Les Pins Francs" 36, rue**
**du Commandant Charcot, F-33200 Bordeaux (FR)**
Inventeur: **Pinson, Jannick, Résidence "San Michel",**
**F-33700 Merignac (FR)**
Inventeur: **Darnault, Jean Paul, Résidence "Le Bayard",**
**F-33400 Talence (FR)**

(74) Mandataire: **Hirsch, Marc-Roger, Cabinet Hirsch 34 rue**
**de Bassano, F-75008 Paris (FR)**

## Description

La présente invention concerne l'inspection par contraste de transparence notamment de récipients transparents ou translucides, en particulier des bouteilles, en vue de détecter d'éventuels défauts ou corps étrangers à l'intérieur des récipients ou bien sur ou dans la paroi de ces derniers.

Plus particulièrement l'invention a trait à l'inspection de bouteilles ou analogues, vides, susceptibles de comporter des défauts ou des corps étrangers adhérant à la paroi ou demeurés à l'intérieur, lesdites bouteilles circulant dans un convoyeur par exemple d'une chaîne d'embouteillage, en vue d'éliminer automatiquement les bouteilles présentant une anomalie.

Il existe déjà différents systèmes d'inspection par contraste de transparence de récipients transparents ou translucides, comme c'est le cas de la demande de brevet français 2 437 616 (KIRIN BEER K.K.), dans lesquels on éclaire transversalement en tout ou partie des récipients pour en projeter l'image en contrejour sur des dispositifs matriciels de caméras. De tels dispositifs présentent le désavantage de ne pas inspecter chaque récipient dans des conditions identiques à celles des autres.

La présente invention a donc pour but essentiel d'assurer une régularité aussi précise que possible dans les conditions de prise de vue de chaque objet inspecté.

Pour ce faire, l'invention a pour objet un procédé d'inspection par contraste de transparence d'objets transparents ou translucides consistant à éclairer transversalement la totalité ou la quasi-totalité de l'objet, et à en projeter l'image en contrejour sur les dispositifs photosensibles matriciels de deux caméras dont l'axe est centré sur l'objet, caractérisé par le fait que ledit procédé comprend, de plus, les étapes suivantes:

a) élimination pour chaque caméra à l'aide d'une fenêtre électronique appropriée à chaque type d'objet, de tout signal provenant de points des dispositifs photosensibles situés hors de ladite fenêtre;

b) analyse successive de chaque point situé dans ladite fenêtre;

c) comparaison du niveau du signal électrique fourni par chaque point avec un niveau électrique de référence pré-établi pour chaque type d'objet;

d) déclenchement du rejet ou du repérage de l'objet inspecté lorsque le nombre de points détectés délivrant un signal électrique hors dudit niveau électrique de référence pour au moins l'une des caméras est supérieur à un nombre prédéterminé.

Elle concerne également un dispositif pour la mise en œuvre du procédé, comprenant une source d'éclairement transversal des objets circulant grâce à des moyens de déplacement faisant circuler lesdits objets entre cette source d'éclairement et deux caméras à dispositifs photosensibles centrée sur lesdits objets et prenant à leur passage dans le champ leur image à contrejour, caractérisé par le fait:

a) que chaque caméra est associée à un générateur de fenêtre électronique se superposant aux signaux d'image issus des dispositifs photosensibles, cette fenêtre correspondant aux contours des objets à inspecter, ce qui élimine les signaux hors fenêtre et garde ceux issus de l'objet;

b) que des moyens d'analyse traitent séquentiellement le niveau électrique du signal émis par chaque point des dispositifs photosensibles à l'intérieur de ladite fenêtre;

c) que des moyens comparent le niveau de chaque point à un niveau de référence prédéterminé réglable;

d) que des moyens comptent le nombre de points ainsi considérés comme hors référence et ordonnent à un système le rejet ou le repérage approprié de tout objet ainsi considéré comme hors référence.

Les caractéristiques et avantages de l'invention ressortiront plus amplement de la description détaillée qui va suivre et en regard des dessins annexés sur lesquels:

la figure 1 représente schématiquement le mode d'analyse de contraste par transparence du corps d'une bouteille conformément à l'invention;

la figure 2 représente une vue de dessus du dispositif de la figure 1;

la figure 3 est un schéma fonctionnel illustrant une partie du traitement des signaux vidéo en provenance des caméras; et

la figure 4 est un schéma fonctionnel illustrant la phase finale de traitement desdits signaux vidéo.

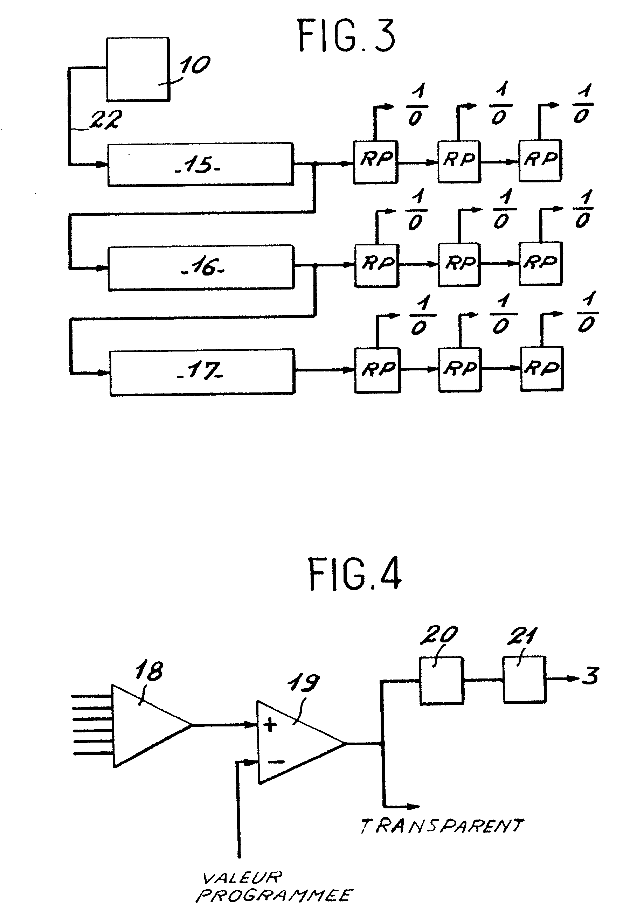

La description et le fonctionnement des circuits vidéo et de commande se rapportant plus particulièrement aux figures 3 et 4 ne font pas partie de l'invention. Ils font l'objet de l'invention selon la demande divisionnaire déposée sous le numéro 87 401 041.6 en date du 18 Mai 1987.

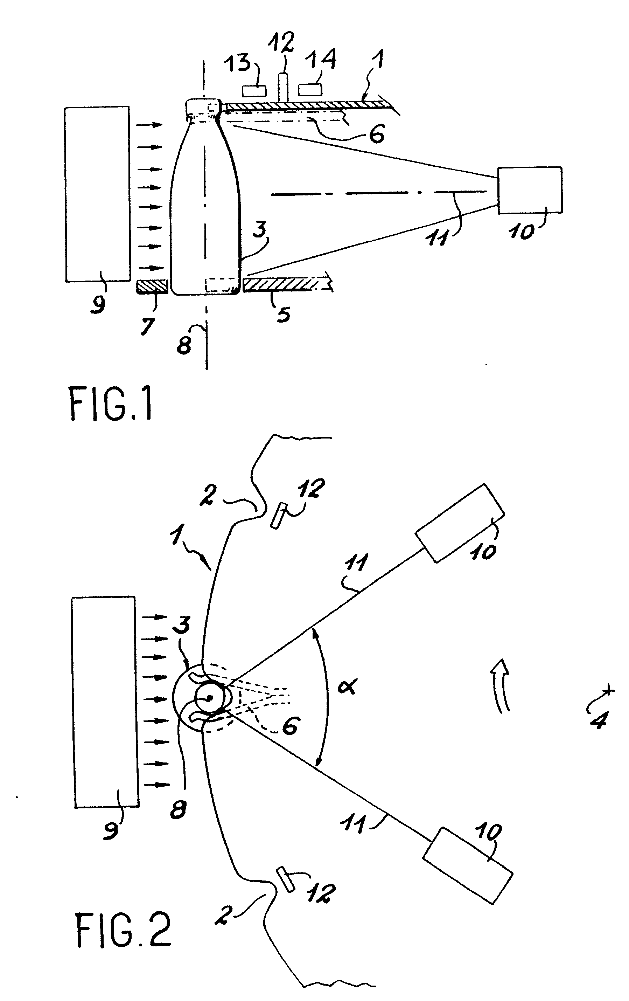

Sur les figures 1 et 2, on a représenté schématiquement en 1 une première étoile rotative 1 d'un type classique utilisé couramment dans les chaînes d'embouteillage. Ce dispositif est inséré dans un convoyeur à un stade ou un autre du conditionnement et est chargé de présenter un à un les récipients à un poste d'inspection, de remplissage, de capsulage, d'étiquetage, etc.

Le dispositif représenté partiellement comprend de la manière habituelle ladite première étoile rotative qui présente la forme d'un disque 1 encoché à sa périphérie régulièrement en 2 pour recevoir le goulot des bouteilles 3 à traiter.

Le disque 1 a son axe 4 vertical et est entraîné en rotation continue par un moyen moteur approprié non représenté.

Parallèlement à l'étoile 1 est disposée une seconde étoile 5 solidaire de la première et également encochée à sa périphérie pour recevoir l'extrémité cylindrique inférieure des bouteilles 3.

Les bouteilles 3 sont maintenues en place dans leurs encoches par une pince 6 montée sur la face inférieure de l'étoile 1 et associée à chaque encoche 2, une telle pince enserrant le goulot immédiatement sous le bourrelet supérieur, les bouteilles étant ainsi en suspension durant tout le temps où elles se trouvent sur l'étoile 1. Un tel dispositif et ses moyens de commande étant courants ne seront pas décrits plus en détails.

Le calage latéral à la partie inférieure des bouteilles est complété par une plaque 7 fixe en arc de cercle, disposée au droit de l'étoile 5 et laissant juste le libre passage des bouteilles.

Les bouteilles 3 se déplacent ainsi en translation circulaire avec leur axe 8 vertical et sont amenées les unes après les autres au poste d'inspection conforme à l'invention lequel est constitué d'une boîte à lumière 9 montée fixe d'un côté de la trajectoire des bouteilles 3 et de deux caméras 10 à transfert de charges montées également fixes mais de l'autre côté de ladite trajectoire.

La boîte à lumière 9 est disposée de manière à éclairer le ventre et le col de la bouteille 3. De préférence, la boîte 9 comporte un écran lumineux diffusant la lumière de manière régulière, le plan de l'écran étant parallèle à l'axe 8 de la bouteille et disposé de façon que chaque caméra 10 voie la bouteille 3 au poste d'inspection à contre-jour.

Les axes de visée 11 des deux caméras 10 sont horizontaux et se coupent sensiblement sur l'axe 8 de la bouteille, l'angle $\alpha$ formé entre les axes 11 étant de plusieurs dizaines de degrés (entre 70 et 100 degrés par exemple).

Le dispositif de présentation des bouteilles 3 au poste d'inspection est également muni, à la manière connue, d'un dispositif de détection en position constitué d'index opaques 12 fixés sur la face supérieure de l'étoile 1 au droit de chaque encoche et susceptible de couper le faisceau lumineux d'un détecteur photoélectrique fixe disposé au droit du poste d'inspection et comprenant une source lumineuse 13 et une cellule photoélectrique 14, ce détecteur n'étant pas représenté sur la figure 2 par souci de clarté.

Les figures 3 et 4 illustrent la chaîne de traitement électronique des signaux vidéo délivrés par les caméras 10. Ces figures illustrent le traitement pour une caméra mais en réalité les signaux des deux caméras sont traités simultanément en parallèle par deux systèmes identiques à celui représenté.

Les signaux vidéo issus de chaque caméra 10 sont envoyés dans trois registres à décalage 15, 16, 17 connectés en ligne.

A chaque registre 15, 16, 17, sont associés trois registres-point RP en ligne, chacun effectuant la comparaison du signal analogique reçu avec un seuil réglable de façon à délivrer une information numérique (1 ou 0).

Les sorties numériques des registres-point RP sont toutes reliées à un additionneur 18 (figure 4) dont la sortie est connectée à l'une des entrées d'un comparateur 19. L'autre entrée du comparateur reçoit une valeur programmable. Le comparateur 19 génère ou non en sortie un signal. S'il n'y a pas de signal, c'est l'indication d'une absence de défaut ou de corps étranger (transparence); s'il y a signal, celui-ci est envoyé sur un compteur 20 déclenchant au bout d'un compte prédéterminé réglable un dispositif symbolisé en 21 de rejet ou de repérage de la bouteille 3 qui vient d'être contrôlée.

Le fonctionnement complet et détaillé du dispositif décrit ci-dessus est le suivant. Les bouteilles 3 sont amenées par l'étoile 1 les unes après les autres au poste d'inspection où elles sont présentées sans temps d'arrêt devant les deux caméras 10 qui sont déclenchées simultanément grâce au dispositif à cellule photoélectrique (12, 13, 14).

Pour ce type de caméra à transfert de charges, le temps d'exposition est de l'ordre de 3 à 10 ms en sorte que le dispositif selon l'invention peut absorber des vitesses de défilement allant jusqu'à 60.000 bouteilles à l'heure.

La prévision de deux caméras 10 décalées angulairement de 90° environ permet de couvrir pour l'analyse par transparence toute la surface de la bouteille 3, ou tout au moins la majeure partie de celle-ci, sans aucune zone morte.

Les caméras à transfert de charges comprennent un dispositif photosensible matriciel constitué d'un certain nombre de points élémentaires (208 par exemple) qu'on appellera par la suite pels.

En bref, l'image est formée sur la trame de pels et mise en mémoire sur une trame de registres à décalage en ligne.

Au niveau de chaque pel on a une charge électrique proportionnelle au flux de lumière et les charges accumulées par tous les pels pendant l'exposition sont transférées par décalages successifs ligne à ligne dans la mémoire.

La lecture de la mémoire se fait par décalage ligne par ligne puis point par point de façon à explorer toute la trame photosensible. Pour chaque point lu, la quantité de charge est convertie en un niveau de tension proportionnel. Ce sont ces signaux analogiques qui sont délivrés en 22 sur la figure 3 par la caméra.

Pour résumer, une telle caméra comprend un système optique, un capteur ou senseur (dispositif photosensible matriciel), une électronique de commande d'exposition-lecture et une électronique vidéo qui conditionne et met en forme le signal de sortie du capteur ou senseur selon le standard ou les normes des signaux de télévision.

Les signaux 22 provenant de chaque caméra 10 sont envoyés sur le jeu de registres à décalage 15 à 17. Ces registres comportent autant de points que les registres des caméras 10 (soit 208 par exemple).

Les trois dernières informations de chaque registre 15 à 17 sont mémorisées dans trois registres-point RP. Ainsi, les signaux vidéo issus de chaque caméra sont mémorisés par lignes entières et on dispose en sortie des registres 15 à 17 des niveaux d'intensité des trois points consécutifs sur une colonne donnée.

Les informations mémorisées dans les registres-point RP sont numérisées par comparaison avec un seuil réglable ajusté en fonction de la transparence du type de bouteille à contrôler. Chaque registre-point RP délivre donc un signal 0 ou 1 correspondant à un point blanc (transparence) ou à un point noir (non transparence) de l'image de la bouteille.

Les registres-point RP fournissent donc une information binaire relative à une zone de 3 × 3 = 9 points de l'image de la bouteille en prenant en compte une zone s'étendant sur 9 pels, zone qui balaiera progressivement toute l'image.

La pondération du niveau de chaque pel en fonction des huit pels immédiatement environnants se fait suivant un algorithme de traitement approprié fonction du type de bouteille, du matériau, et de la forme et nature des corps étrangers ou défauts à détecter.

Une telle pondération se fait par programme par exemple en fonction du niveau moyen de transparence de chaque récipient, de la position dans l'image du point considéré et de la position de chaque point environnant relativement audit point considéré.

Afin d'éliminer toute cause de perturbation étrangère au but recherché, des circuits incorporés dans l'unité de traitement associé aux caméras 10 et non représentés sur les dessins, sont chargés à la manière habituelle et bien connue de générer une fenêtre électronique d'inspection définie par la conformation du type de bouteille à contrôler. Une telle fenêtre est destinée à ne prendre en compte que les signaux provenant des seuls pels se trouvant dans la zone image de la bouteille formée sur le capteur ou senseur de chaque caméra 10.

Des moyens sont bien entendu prévus pour passer d'un type de fenêtre à un autre lorsque le type de bouteille à contrôler est changé.

Toutes les sorties binaires des registres-point RP sont reliées à l'additionneur 18 (figure 4) et on compare la moyenne pondérée issue de l'additionneur 18 avec une valeur numérique programmable dans le comparateur 19 qui délivre un signal binaire qui est pour chaque pel considéré compte tenu de son environnement immédiat, soit un 0 (la zone élémentaire de la bouteille correspondant au pel considéré étant tenue pour transparente selon les critères retenus) soit un 1 (la zone en question étant considérée comme non transparente).

Les signaux binaires 1 sont comptés dans le compteur 20 dans lequel, lorsque le compte atteint un seuil prédéterminé réglable, délivre un signal au dispositif 21 qui est soit un système classique de mise à l'écart de la bouteille qui vient d'être contrôlée, soit un dispositif de repérage quelconque permettant ultérieurement d'enlever la bouteille du convoyeur.

Il est toutefois prévu que le compteur 20 ne comptabilise que les signaux 1 qui se suivent, le compteur étant remis à zéro si un 0 suit un 1 afin d'ignorer des défauts considérés comme non significatifs ou trop restreints en dimension.

Chaque caméra 10 est suivie des mêmes circuits de traitement que ceux représentés sur les figures 3 et 4, la bouteille contrôlée étant écartée ou repérée si l'une des deux caméras 10 ou si les deux «voient» un corps étranger ou un défaut.

Les divers seuils de comparaison ainsi que l'algorithme de traitement évoqué plus haut permettent de tenir compte, et par suite de considérer comme des défauts, ou au contraire de ne pas tenir compte, de toutes sortes d'anomalies de contraste par exemple à des rayures ou traces d'usure, à des morceaux d'étiquette ou des corps étrangers adhérant à la paroi de la bouteille ou contenus dans celle-ci, à des résidus de liquides, à des taches, etc., suivant des critères de «défauts» très variables et qu'il est facile d'adapter à chaque type de récipient à contrôler.

Pour faciliter l'exploration de chaque objet, il est prévu une électronique de commande d'exposition-lecture utilisant les caractéristiques d'un capteur à transfert de charge par trame.

Cette électronique a pour effet:

de déclencher l'intégration de la zone image du capteur au moment précis du passage de l'objet à étudier, ce qui a pour conséquence de disposer d'images dans lesquelles les objets à analyser sont toujours situés au même endroit d'une prise de vue à l'autre et ceci en rapport avec l'utilisation d'une fenêtre d'exploration;

d'asservir la durée d'exposition de chaque image à la vitesse de passage des objets devant la caméra de manière à diminuer le flou de l'image tout en conservant un bon contraste;

de sauvegarder rapidement l'image dans la mémoire à transfert de charge de manière à pouvoir relire l'image-objet ainsi obtenue à une vitesse indépendante du temps d'exposition et d'un éventuel cycle de balayage.

L'intégration simultanée des pels dans un tel capteur permet également de s'affranchir de phénomènes de distorsion d'image d'objet en mouvement, phénomènes bien connus dans les caméras à balayage classique.

Il est à noter que l'invention peut s'appliquer à tout récipient transparent ou translucide mais également d'une manière générale à tout corps transparent ou translucide capable d'être contrôlé par contraste de transparence en vue de la détection d'éventuels défauts, corps étrangers ou autres causes de contraste de transparence.

Dans le mode de réalisation représenté et décrit ci-dessus, mais non revendiqué dans la présente demande, on a prévu le balayage du contenu de la mémoire des capteurs ou senseurs des caméras 10 en prenant en compte successivement chaque pel et ses huit pels environnants, mais on pourrait bien entendu, soit étendre, soit restreindre une telle prise en compte en adaptant en conséquence, d'une part, le nombre de registres tels que 15 à 17 et, d'autre part, le nombre de registres-point tels que RP associés à chaque registre, le principe et les techniques de pondération demeurant inchangés. Une telle adaptation peut être nécessitée par le type de «défauts» à repérer.

Enfin, l'homme de métier pourrait envisager diverses variantes, notamment en ce qui concerne la nature, la forme, la disposition de la boîte à lumière 9, la disposition mutuelle de celle-ci et des caméras 10 par rapport à la trajectoire des bouteilles 3 ou autres corps à contrôler, ainsi que les moyens électroniques de traitement des signaux délivrés par les caméras.

## Revendications

1. Procédé d'inspection par contraste de transparence d'objets (3) transparents ou translucides consistant à éclairer transversalement la totalité ou la quasi-totalité de l'objet (3), et à en projeter l'image en contrejour sur les dispositifs photosensibles matriciels de deux caméras (10) dont l'axe (11) est centré sur l'objet (3), caractérisé par le fait que ledit procédé comprend, de plus, les étapes suivantes:

a) élimination pour chaque caméra (10) à l'aide d'une fenêtre électronique appropriée à chaque type d'objet (3), de tout signal provenant de points des dispositifs photosensibles situés hors de ladite fenêtre;

b) analyse successive de chaque point situé dans ladite fenêtre;

c) comparaison du niveau du signal électrique fourni par chaque point avec un niveau électrique de référence pré-établi pour chaque type d'objet (3);

d) déclenchement du rejet ou du repérage de l'objet (3) inspecté lorsque le nombre de points détectés délivrant un signal électrique hors dudit niveau électrique de référence pour au moins l'une des caméras (10) est supérieur à un nombre prédéterminé.

2. Procédé selon la revendication 1, caractérisé par le fait que l'objet est un récipient (3), qu'il est éclairé sensiblement orthogonalement à son axe (8) et que les caméras (10) sont axées sensiblement orthogonalement à ce même axe (8) du récipient (3).

3. Procédé selon l'une des revendications 1 et 2, caractérisé par le fait que le rejet ou le repérage n'est effectué que lorsqu'un nombre prédéterminé de points considérés comme hors référence sont détectés.

4. Procédé selon l'une des revendications 1 à 3, caractérisé par le fait que les caméras (10) sont à transfert de charges et à dispositif photosensible matriciel.

5. Dispositif pour la mise en œuvre du procédé selon l'une des revendications 1 à 4, comprenant une source d'éclairement (9) transversal des objets (3) circulant grâce à des moyens (1) de déplacement faisant circuler lesdits objets (3) entre cette source d'éclairement (9) et deux caméras (10) à dispositifs photosensibles centrée sur lesdits objets (3) et prenant à leur passage dans le champ leur image à contrejour, caractérisé par le fait:

a) que chaque caméra (10) est associée à un générateur de fenêtre électronique se superposant aux signaux d'image issus des dispositifs photosensibles, cette fenêtre correspondant aux contours des objets (3) à inspecter, ce qui élimine les signaux hors fenêtre et garde ceux issus de l'objet;

b) que des moyens (15, 16, 17, RP) d'analyse traitent séquentiellement le niveau électrique du signal émis par chaque point des dispositifs photosensibles à l'intérieur de ladite fenêtre;

c) que des moyens (18, 19) comparent le niveau de chaque point à un niveau de référence prédéterminé réglable;

d) que des moyens (20) comptent le nombre de points ainsi considérés comme hors références et ordonnent à un système (21) le rejet ou le repérage approprié de tout objet (3) ainsi considéré comme hors référence.

6. Dispositif selon la revendication 5, pour la mise en œuvre du procédé selon l'une des revendications 2 à 4, caractérisé par le fait que les objets (3) sont des récipients, que l'éclairage en est assuré sensiblement orthogonalement à leur axe (8), que la prise de vue est assurée sensiblement orthogonalement à leur axe (8).

7. Dispositif selon l'une des revendications 5 ou 6, caractérisé par le fait que les deux caméras (10) centrées sur l'objet (3) en position d'inspection présentent entre leurs axes (11) un angle (α) de plusieurs dizaines de degrés.

8. Dispositif selon la revendication 7, caractérisé par le fait que l'angle (α) entre les axes (8) de caméras (10) est de 90°.

9. Dispositif selon l'une des revendications 6 à 8, caractérisé par le fait que la source d'éclairement est une boîte à lumière (9) à écran diffusant plan, concave ou convexe, parallèle à l'axe (8) du récipient (3) en position d'inspection.

10. Dispositif selon l'une des revendications 5 à 9, caractérisé par le fait que les caméras (10) sont à transfert de charges et à dispositif photosensible matriciel.

## Claims

1. Method of inspection by transparency contrast of transparent or translucid objects consisting of illuminating traversely to its axis the whole or quasi-whole of the object, and to project the image against the light on photosensitive matrix devices of two cameras with the sighting axis being centered on the object, wherein the said method furthermore comprises the following steps:

a) elimination for each camera by means of an electronic window adapted to each type of object, of any signal issuing from the points of the photosensitive devices located outside the said window;

b) successive analysis of each point located within the said window;

c) comparison of the level of the electronic signal supplied by each point with a predetermined reference electronic level for each type of object;

d) release of the rejection or the referencing of the inspected object when the detected number of points supplying an electric signal beyond the said electric reference level for at least one of the cameras is greater than a predetermined number.

2. Method according to claim 1, wherein the object is a container, which is illuminated substantially orthogonal to its axis and the cameras are centered substantially orthogonal to this same axis of the recipient.

3. Method according to claim 1, wherein the rejection or the marking is only performed when a predetermined number of points considered as beyond reference are detected.

4. Method according to claim 1, wherein the cameras are charge transfer cameras with photosensitive matrix device.

5. Device for carrying out the method, comprising a transversal illumination source of the objects circulating by means of displacement means causing to circulate the said objects between this illumination source and two cameras equipped with photosensitive devices centered on the said objects and taking upon their passage in the field their image against the light, wherein:

a) each camera is associated to a generator of an electronic window superimposed upon the image signals issuing from the photosensitive devices, this window corresponding to the outlines of the objects to be inspected, thereby eliminating the signals beyond the window and maintaining those issued from the object;

b) that the analysis means sequentially process the electric level of the signal transmitted by each point of the photosensitive devices inside the said window;

c) that the means comparing the level of each point with a variable predetermined reference level;

d) that means count the number of points thus considered as deviating from the reference and connected with means to actuate a system to reject or to mark the container considered to be defective.

6. Device according to claim 5, for carrying out the method according to claim 2, wherein the objects are containers, the lighting is ensured substantially orthogonally thereto to their axis, the image taking is ensured substantially orthogonally to their axis.

7. Device according to claim 5, wherein the two cameras centered on the object in the inspection position have between their axes an angle ($\alpha$) of several tens of degrees.

8. Device according to claim 7, wherein the angle ($\alpha$) between the axes of the cameras is 90°.

9. Device according to claim 6, wherein the illuminating source is a light box with diffusing screen plane, convex or concave, parallel to the axis of the container in inspection position.

10. Device according to claim 5, wherein the cameras are charge transfer cameras and with matrix photosensitive device.

**Patentansprüche**

1. Verfahren zur Transparenzkontrast-Prüfung von durchsichtigen bzw. durchscheinenden Gegenständen (3), bei dem der betreffende Gegenstand (3) gänzlich oder annähernd gänzlich in Querrichtung beleuchtet wird und sein Bild im Gegenlicht auf die Matrizenvorrichtungen zweier Kameras (19) projiziert wird, deren Achse (11) auf den Gegenstand ausgerichtet ist, dadurch gekennzeichnet, dass es folgende Verfahrensschritte umfasst:

a) man unterdrückt für jede Kamera (10) vermittels eines geeigneten elektronischen Fensters, das dem jeweiligen Typ zu prüfender Gegenstände (3) angepasst ist, jegliches Signal, das von ausserhalb des Fensters gelegenen Stellen bzw. Punkten der lichtempfindlichen Einrichtungen herrührt;

b) man analysiert nacheinander alle innerhalb des Fensters gelegenen Punkte;

c) man vergleicht den Wert des von jedem der Punkte erzeugten Signals mit einem vorbestimmten elektrischen Bezugswert, der dem jeweiligen Typ zu prüfender Gegenstände (3) entspricht;

d) man bewirkt die Zurückweisung bzw. die Kennzeichnung eines jeden zu prüfenden Gegenstands (3), bei dessen Prüfung die Anzahl der elektrische Signale auslösenden, aufgefundenen Punkte in wenigstens einer der Kameras (10) grösser ist als eine vorbestimmte Anzahl.

2. Verfahren nach Anspruch 1, dadurch gekennzeichnet, dass der Gegenstand ein Behälter (3) ist, dass er in wesentlich orthogonaler Richtung in bezug auf seine Achse (8) beleuchtet wird, und dass die Kameras (10) in bezug auf diese Achse (8) des Behälters (3) wesentlich orthogonal ausgerichtet sind.

3. Verfahren nach Anspruch 1 oder 2, dadurch gekennzeichnet, dass die Eliminierung bzw. Markierung nur dann erfolgt, wenn eine vorbestimmte Anzahl von als fehlerhaft betrachteten Punkten ermittelt wird.

4. Verfahren nach einem der Ansprüche 1 bis 3, dadurch gekennzeichnet, dass die Kameras (10) Ladungsübertragungskameras sind und je eine lichtempfindliche matrizielle Vorrichtung umfassen.

5. Verfahren zur Ausführung des Verfahrens nach einem der Ansprüche 1 bis 4, mit einer Lichtquelle (9), die die Gegenstände (3) in Querrichtung beleuchtet, während dieselben durch Fördermittel (1) zwischen der Lichtquelle (9) und zwei mit lichtempfindlichen Vorrichtungen versehenen, auf die zu prüfenden Gegenstände ausgerichteten Kameras (10) gefördert werden, die beim Durchgang der Gegenstände deren Bild im Gegenlicht aufnehmen, dadurch gekennzeichnet:

a) dass jede Kamera (10) einem elektronischen Fenstererzeuger zugeordnet ist, derart, dass das Fenster den von den lichtempfindlichen Vorrichtungen abgebenen Signalen überlagert ist und dem Profil der zu prüfenden Gegenstände (3) entspricht, wodurch die ausserhalb des Fensters gelegenen Signale eliminiert und die dem jeweiligen Gegenstand entsprechenden Signale aufrecht erhalten werden;

b) dass Analysiermittel (15, 16, 17, RP) in vorbestimmter Folge den elektrischen Wert des von jedem Punkt der lichtempfindlichen Vorrichtungen innerhalb des Fensters abgegebenen Signals auswerten;

c) dass Mittel (18, 19) vorgesehen sind, die den Wert eines jeden Punkts mit einem einstellbaren vorgegebenen Bezugswert vergleichen; und

d) dass Mittel (20) vorgesehen sind, die die Anzahl der somit als nicht zulässig betrachteten Punkte zählen und ein System (21) zur Eliminierung bzw. zur geeigneten Kennzeichnung eines jeden somit als nicht zulässig betrachteten Gegenstands (3) steuern.

6. Vorrichtung nach Anspruch 5, zur Ausführung des Verfahrens nach einem der Ansprüche 2 bis 4, dadurch gekennzeichnet, dass die Gegenstände (3) Behälter sind, dass die Beleuchtung in bezug auf die jeweilige Behälterachse (8) wesentlich orthogonaler Richtung erfolgt, und dass die Aufnahme (Sichtung) in zur Achse (8) wesentlich orthogonaler Richtung erfolgt.

7. Vorrichtung nach Anspruch 5 oder 6, dadurch gekennzeichnet, dass die Achsen (11) der beiden auf den in Prüfstellung befindlichen Behälter ausgerichteten Kameras (10) einen mehrere Dutzend Grad betragenden Winkel (alpha) einschliessen.

8. Vorrichtung nach Anspruch 7, dadurch gekennzeichnet, dass die Achsen (8) der Kameras (10) einen Winkel von 90° einschliessen.

9. Vorrichtung nach einem der Ansprüche 6 bis 8, dadurch gekennzeichnet, dass die Lichtquelle ein Lichtquellengehäuse (9) mit ebenem, konkavem oder konvexem Diffusionsstrahlschirm ist, welcher zur Achse des in Prüfstellung befindlichen Behälters (3) parallel ist.

10. Vorrichtung nach einem der Ansprüche 5 bis 9, dadurch gekennzeichnet, dass die Kameras Ladungsübertragungskameras sind und je eine lichtempfindliche matrizielle Vorrichtung aufweisen.

FIG.1

FIG.2

# FIG.3

# FIG.4

TRANSPARENT

VALEUR
PROGRAMMEE